Europäisches Patentamt

European Patent Office

Office européen des brevets

(19)

(11)    EP 1 591 325 A1

(12)    EUROPEAN PATENT APPLICATION

(43) Date of publication:
    02.11.2005  Bulletin 2005/44

(51) Int Cl.⁷: **B60R 21/16**, D03D 1/02,
    D06N 3/12

(21) Application number: 05252696.9

(22) Date of filing: 29.04.2005

(84) Designated Contracting States:
    **AT BE BG CH CY CZ DE DK EE ES FI FR GB GR
    HU IE IS IT LI LT LU MC NL PL PT RO SE SI SK TR**
    Designated Extension States:
    **AL BA HR LV MK YU**

(30) Priority: **30.04.2004 US 835002**

(71) Applicant: **HIGHLAND INDUSTRIES, INC.**
    **Greensboro North Carolina 27408 (US)**

(72) Inventors:
    • **Schindzielorz, Michael, c/o Highlands Industries**
      **Kennersville, North Carolina 27284 (US)**
    • **Burkhart, Scott, c/o Highlands Industries**
      **Kennersville, North Carolina 27284 (US)**

(74) Representative: **Roberts, Mark Peter**
    **J.A. Kemp & Co.,**
    **14 South Square,**
    **Gray's Inn**
    **London WC1R 5JJ (GB)**

(54)    **Coated airbag fabric**

(57)    A coated fabric includes a fabric web (50) and a coating layer (60). The coating layer (60) overlies the fabric web (50) so that the coated fabric (50) has increased resistance to particulate burn-through.

Fig. 3

**Description**

BACKGROUND

The present invention relates to a coated fabric and, more particularly, to a coated airbag fabric having an increased thermal resistivity.

Fabrics made for certain applications, such as use in vehicle airbags, may require treatment with a coating to improve permeability characteristics. The permeability of airbag fabrics is typically reduced by coating the fabric with a material such as silicone. Conventional coating machines are configured to apply a coating to a woven fabric having a porous web of yarn bundles. The coating is typically supported above the fabric in a trough and is dispensed onto the fabric through an opening between the trough and a coating blade as the fabric travels through the coating machine. The fabric is typically held against the coating blade by a support surface or by fabric tension while the coating blade scrapes the coating onto the fabric.

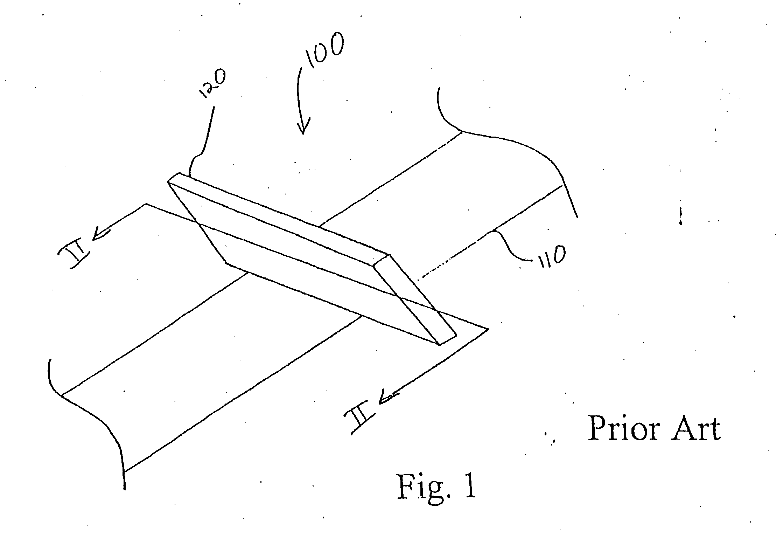

An example of a treatment arrangement for applying a coating to a web of fabric is illustrated in FIG. 1. The illustrated arrangement 100 includes a conveyor 110 for transporting a web of fabric through one or more treatment stations. A coating blade 120 is provided to supply a coating material, such as silicone, to the fabric web. Application of a coating in this manner is known as blade coating or knife-over roll coating.

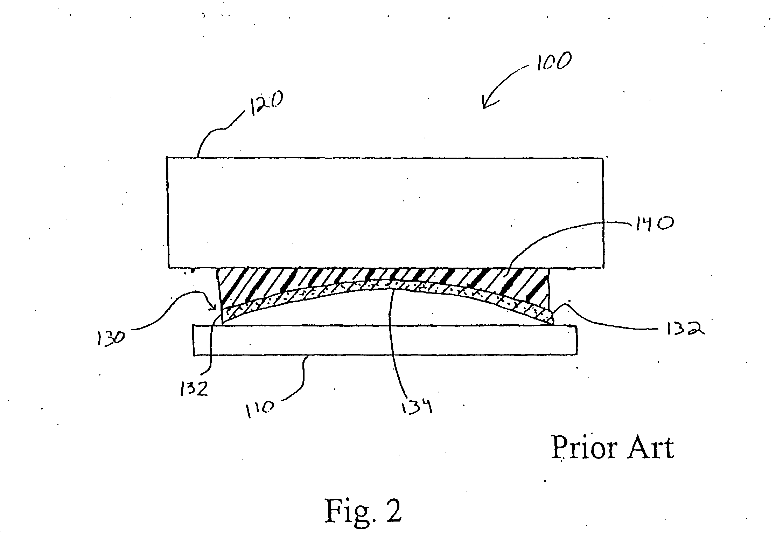

FIG. 2 is a cross-sectional view of the coating of a fabric web 130 by the coating blade 120. Coating blades, such as the coating blade 120, apply a coating 140 by scraping the coating 140 onto the fabric web 130. A distance between the fabric web 130 and the blade 120 may be adjusted to control the thickness of the coating. One disadvantage of such a scraping technique is that the scraping of the fabric web 130 tends to temporarily warp the fabric web 130 so that the web 130 is pulled, thereby causing a thinning and stretching of the central portion 134 of the web 130, as illustrated in FIG. 2. Thus, the top surface of the fabric web 130 forms a curvature with the fabric web being raised at the central portion 134. The curvature causes the coating 140, applied to the fabric web 130 using the coating blade 120, to be uneven. As a result, a thicker coating layer is applied to the edges 132 while the central portion 134 is provided with relatively little coating. Thus, blade coating when the web is insufficiently supported may result in a fabric web having uneven coating, which may result in non-uniform permeability and potential weaknesses in a final product such as a vehicle airbag.

Various parameters control the characteristics of a coated fabric. One controlling parameter is the penetration (absorption or sink) rate of a coating into a fabric web, which is determined by the time the coating is allowed to stand on the fabric before the fabric encounters the coating blade. Another controlling parameter is pressure between the fabric and the coating blade. For example, the scraping action of the coating blade may increase the pressure so that the coating is pressed into the fabric. The pressure may be varied by adjusting the position of the coating blade in a direction toward or away from the fabric.

One disadvantage of conventional coating machines is that scraping, tension, and pressure occurring during coating application drive the coating into the woven fabric so that the coating penetrates interstices between the yarn bundles of the fabric. As a result, portions of the coating are received on internal fibers within the interstices and pockets of non-uniformity are formed on the surface of the coating layer, which results in coating weight and physical property variations across the coated fabric. Additionally, because some of the coating is absorbed into the interstices, more coating is required to achieve a sufficient surface coating.

Another disadvantage of conventional coating machines is that the fabric exhibits uneven tension across a width of the fabric due to inadequate support. As a result, the selvages or lengthwise edges of the fabric may slacken, sag, or curl thereby causing streaks of coating along the edges of the fabric.

Another disadvantage of conventional coating machines is that the fabric moves relative to the coating machine support resulting in generation of static electricity and buildup of an electrostatic charge on the fabric. Conglomerations of coating (spits) are attracted by the electrostatic charge resulting in coating defects when the conglomerations are deposited on the coating surface.

Coated fabrics have various applications. For example, a coated woven fabric may be used as an airbag fabric in the manufacture of inflatable airbags for protecting vehicle occupants. Coatings are often applied to airbag fabrics to achieve desired properties and characteristics. For example, coatings such as chloroprene (neoprene), silicone, and other elastomeric resins have been used. As a result of the non-uniform coating application, however, coated airbag fabrics can present various disadvantages.

Airbag fabrics are required to withstand high temperatures created by pyrotechnic inflators and rapidly expanding inflation gas. However, a non-uniform coating on an airbag fabric results in a variation of thermal characteristics across the coated fabric. When an insufficient amount of coating is applied to a portion of the airbag fabric (e.g., due to pockets of non-uniformity caused by coating penetrating the interstices of the fabric), that portion of the airbag may experience decreased thermal resistance and increased possibility of particulate bum-through.

Airbag fabrics must also possess limited air permeability so that the airbag may inflate when filled with inflation gas. Driver and passenger side air bags are designed to withstand large inflation pressures and then to deflate quickly in order to effectively absorb impact energy from the vehicle occupant when the occupant contacts the airbag. Thus, driver and passenger side airbags are made from low air permeability fabric but include uncoated seams or vent holes to enable rapid deflation of the airbag. In contrast, side curtain airbags are designed to provide rollover protection to vehicle occupants by remaining inflated during an entire rollover event, which is a longer time than the initial impact event for which driver and passenger side airbags are designed. Although side curtain airbags are also made from low air permeability fabric, side curtain airbags are constructed to retain inflation pressure for a given duration.

As a result, side curtain airbag fabrics are typically coated with large amounts of coating to overcome coating non-uniformity problems so that the airbag may achieve the high leak-down time required for side curtain airbags. The heavy coating adds substantial cost to the manufacturing process and also reduces the pliability and increases the stiffness of the airbag fabric. Reduced pliability and increased stiffness are particularly problematic for side curtain airbags because side curtain airbags are generally stored in the vehicle roofline where space is limited.

Reduced pliability and increased stiffness are also problematic for driver side airbags and passenger side airbags, which must be flexible enough to be compactly folded and stowed within a vehicle steering wheel column or a vehicle dashboard, respectively. The bulk and stiffness of a heavily coated airbag fabric reduces the flexibility of the fabric and increases the folded volume of the finished airbag. Packed volume and packability are increasingly important features of airbag fabrics because airbags must be accommodated in small spaces within a vehicle interior.

Airbag fabrics must also be sufficiently smooth to enable surfaces of the airbag to slide along one another so that the airbag can rapidly inflate and deploy in an unhindered manner. When a heavy, non-uniform coating is applied to an airbag fabric, the coated portions of the airbag may tend to adhere together during deployment. The problem of is amplified when the coated portions are closely packed together thereby increasing the potential of delayed deployment and is of particular concern with complex folding patterns designed to control airbag deployment to reduce occupant impact force.

SUMMARY OF THE INVENTION

An aspect of the present invention relates to a coated fabric. The coated fabric includes a fabric web and a coating layer. The coating layer overlies the fabric web so that the coated fabric has increased resistance to particulate bum-through.

Another aspect relates to a coated fabric for an airbag. The coated fabric is configured so that a time for an element having a temperature of approximately 450 degrees Fahrenheit to bum through the coated fabric is greater than 2.5 seconds.

Yet another aspect relates to an airbag for protecting an occupant of a vehicle. The airbag is formed of a coated fabric configured so that a time for an element having a temperature of approximately 450 degrees Fahrenheit to burn through the coated fabric is greater than 2.5 seconds.

BRIEF DESCRIPTION OF THE DRAWINGS

The accompanying drawings, which are incorporated in and constitute a part of this specification, illustrate embodiments of the invention and, together with the description, serve to explain principles of the invention.

FIG. 1 illustrates a prior art arrangement for coating a fabric.

FIG. 2 is a cross-sectional view of the arrangement of FIG. 1 taken along II-II.

FIG. 3 is a side elevational view of an embodiment of a coating apparatus according to the present invention.

FIG. 4 is a side elevational view of the coating apparatus of FIG. 3 showing a coating blade in an angled configuration.

FIG. 5 is a top plan view of the coating apparatus of FIG. 3.

FIG. 6 is a side elevational view of the coating blade and a first support of the coating apparatus of FIG. 3.

FIG. 7 is a top plan view of an embodiment of an uncoated fabric according to the present invention.

FIG. 8 is a cross sectional side elevational view of an embodiment of a coated fabric according to the present invention.

FIG. 9 illustrates a specimen for determining an average coating thickness.

FIG. 10 is a side elevational view of an embodiment of a coating apparatus according to the present invention.

FIG. 11 is a top plan view of the coating apparatus of FIG. 10.

FIG. 12 is a front elevational view of a third support of the coating apparatus of FIG. 10.

FIG. 13 is a side elevational view of a vehicle interior showing a driver side airbag.

FIG. 14 is a side elevational view of a vehicle interior showing a side curtain airbag.

FIG. 15 is a graph illustrating pressure decay over time for an embodiment of a coated fabric according to the present invention.

FIG. 16 is a graph illustrating burn-through time of an embodiment of a coated fabric according to the present invention.

FIG. 17 is a perspective view of a test apparatus for determining specific packability.

FIG. 18 is a side elevational view of the test apparatus of FIG. 17.

FIG. 19 illustrates an apparatus for treating a fabric arrangement.

FIG. 20 is a perspective view of a fabric treating arrangement according to an embodiment of the present invention.

FIG. 21 illustrates a coating arrangement according to an embodiment of the present invention.

FIG. 22 is a cross-sectional view of the arrangement of FIG. 21 taken along IV-IV.

DETAILED DESCRIPTION

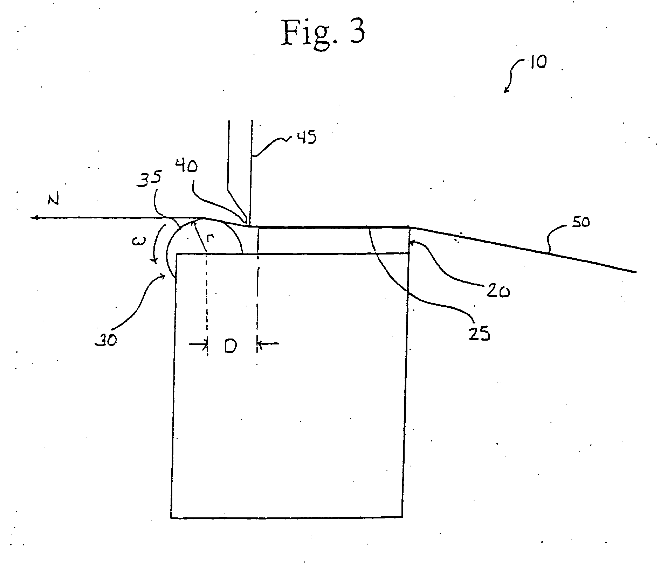

FIGS. 3 through 6 show an embodiment of a coating apparatus 10 according to the present invention. The coating apparatus 10 includes a first support 20, a second support 30, and a coating blade 40.

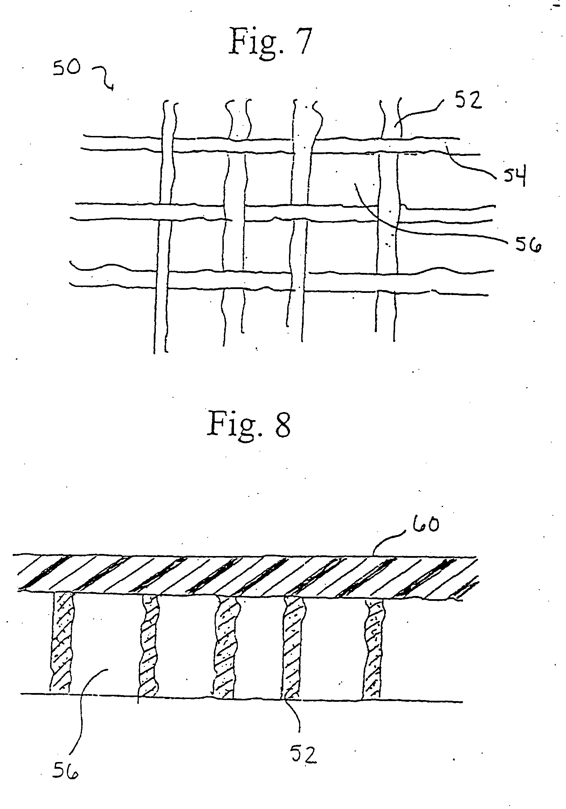

The first support 20 is configured to support a fabric 50 as the fabric 50 advances through the coating apparatus 10. The fabric 50 may be, for example, a woven fabric (fabric web) having warp yam bundles 52 and fill yam bundles 54 with interstices 56 disposed between the yarn bundles 52 and 54, as shown in FIG. 7.

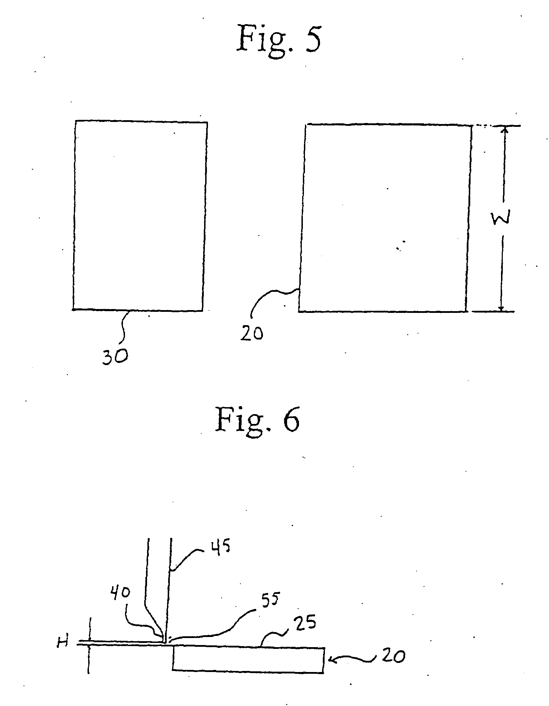

The first support 20 includes an upper surface 25 configured to support the weight of the fabric 50 in a substantially uniform manner. The upper surface 25 is preferably a substantially horizontal planar surface such as a top surface of a table. To prevent portions of the fabric 50 from sagging as the fabric 50 moves over the first support 20, a width W of the upper surface 25 (shown in FIG. 5) may be at least as wide as a width of the fabric 50 so that the entire width of the fabric 50 is supported by the first support 20. For example, the width of the upper surface 25 may be approximately 50 to 80 inches. Additionally, the upper surface 25 may be formed of a rigid material, such as stainless steel, to prevent the fabric 50 from deflecting at a point where a coating 60 is introduced onto the fabric 50.

Because the width W and rigidity of the upper surface 25 reduce (or prevent) deflection of the fabric 50, the fabric 50 is sufficiently supported without tensioning the fabric 50. As a result, the coating apparatus 10 is able to apply the coating 60 to a top surface of the fabric 50 so that the coating 60 does not substantially penetrate the interstices 56 of the fabric 50, as shown in FIG. 8. Thus, a layer of coating 60 substantially overlies the fabric web and variation in the layer of coating across the fabric 50 is reduced.

The layer of coating 60 preferably has an average thickness $T_{avg}$ that is substantially uniform over the coated fabric 50. The average thickness $T_{avg}$ may be, for example, 20 microns ($\mu$m) or greater. For example, the average thickness $T_{avg}$ may be 40 microns but is preferably approximately 30 microns. In contrast, when the same mass of coating is applied to a conventional airbag fabric, the resulting coating layer has an average thickness of less than 20 microns (typically 14 to 15 microns) because the coating penetrates (or sinks into) the interstices of the conventional airbag fabric thereby reducing the amount of coating overlying the fabric web and the average thickness of the coating layer.

In an exemplary embodiment, 23 to 34 grams per square meter (g/m$^2$) of coating 60 are applied to the fabric 50. Thus, according to an embodiment of the invention, the ratio of the coating weight to the average thickness $T_{avg}$ is 1.7 or less. According to various embodiments of the invention, the ratio may be 0.5 to 1.7, or any intervening ratio there between, but is preferably 0.76 to 1.13.

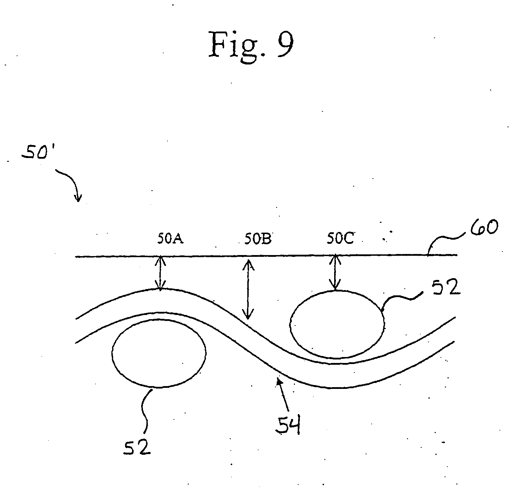

The average thickness $T_{avg}$ of the coated fabric 50 may be determined, for example, by preparing a cross sectional specimen 50' of the coated fabric 50 and taking one coating thickness measurement at each of locations 50A, 50B, and 50C, as shown in FIG. 9. The cross sectional specimen 50' can be prepared, for example, by positioning the coated fabric 50 so that the coated side is facing a surface of a cutting board. A sharp blow is delivered to a razor blade positioned parallel to and running directly along a top of a fill yarn bundle 54 so as to cut the fill yam bundle 54 longitudinally in half. The average thickness $T_{avg}$ of the specimen 50' is determined by averaging the measurements taken at the locations 50A, 50B, and 50C.

The second support 30 is separated from the first support 20 by a separation distance D and is configured to support the fabric 50 as the fabric 50 moves from the first support 20 to the second support 30. As shown in FIG. 3, the separation distance D is a distance between an aft edge of the first support 20 and a center of the second support 30. The distance D is set so that a portion of the fabric 50 spanning the first and second supports deflects only slightly or not at all as the fabric 50 traverses the separation distance D. The separation distance D may be, for example, 0 to 1.5 inches. Because the fabric 50 deflects only slightly, the coating 60 is applied so that the resulting layer of coating 60 overlies the fabric web and does not substantially penetrate the interstices 56 of the fabric 50, as described above.

The second support 30 is preferably configured to reduce (or eliminate) relative motion between the second support 30 and the fabric 50 as the fabric 50 advances through the coating apparatus 10. For example, the second support 30 may include a cylindrical support surface 35 configured to rotate in a direction of advancement of the fabric 50, as shown in FIG. 3. In an exemplary embodiment, the cylindrical support surface 35 is an outer surface of a roller and has a diameter of, for example, 1 to 2 inches. To sufficiently support the fabric 50, the cylindrical support surface 35 is at least as wide as the fabric 50.

A speed of rotation ω (angular velocity) of the second support 30 is preferably set to correspond to a speed of advancement N of the fabric 50 based on the following equation:

$$\omega = \frac{N}{2\pi r} \qquad (1)$$

where

N is the speed of advancement of the fabric 50;
ω is the speed of rotation of the second support 30; and
r is a radius of the cylindrical support surface 35.

The speed of advancement N may be, for example, approximately 20 to 60 yards per minute. Thus, for example, if the fabric 50 is advancing at a speed of 20 yards per minute (720 inches per minute) and the radius of the second support 30 is 1 inch, the speed of rotation ω of the second support 30 that corresponds to the speed of advancement N is approximately 114.6 revolutions per minute. When the speed of advancement N and the speed of rotation ω correspond, relative motion between the fabric 50 and the second support 30 is reduced. The reduction in relative motion substantially reduces generation of an electrostatic charge on the coated fabric 50 thereby reducing the potential for spits to form on the layer of coating. As a result, overall uniformity and surface quality of the layer of coating 60 applied to the fabric 50 is improved and coating weight variation (e.g., caused by pockets of non-uniformity) across the fabric 50 is reduced.

The coating blade 40 is disposed between the first support 20 and the second support 30 and includes a coating bank 45 for dispensing the coating 60 onto the top surface of the fabric 50 as the fabric 50 travels from the first support 20 to the second support 30. The coating blade 40 is configured to apply the coating 60 so that the coating 60 does not substantially penetrate interstices 56 between the woven yam bundles 52 and 54 of the fabric 50, as shown in FIG. 8. Thus, as discussed above, the layer of coating 60 overlies the fabric web and has a substantially uniform average thickness $T_{avg}$ across the coated fabric 50.

For example, the coating blade 40 may be positioned so that a gap 55 (shown in FIG. 6) exists between a bottom of the coating blade 40 and a plane defined by the upper surface 25 of the first support 20. A height H of the gap 55 may be set so that a force applied to the coating 60 by the coating blade 40 is not so large as to drive the coating 60 into the interstices 56 of the fabric web. Preferably, the height H of the gap 55 is approximately two times a thickness of the fabric ± 0.005 inches. For example, for a 210 denier fabric, the height H is approximately 0.024 inches ± 0.005 inches; for a 420 denier fabric, the height H is approximately 0.030 inches ± 0.005 inches; for a 630 denier fabric, the height H is approximately 0.034 inches ± 0.005 inches; and for an 840 denier fabric, the height H is approximately 0.040 inches ± 0.005 inches.

The coating blade 40 is preferably configured for rotatable and linear motion so that the height H may be adjusted. For example, the coating blade 40 may be configured to move in a vertical direction. By manipulating the coating blade to vary a vertical distance between the coating blade 40 and the fabric 50, the pressure applied to the coating 60 is varied. In this manner, the pressure applied to the coating 60 can be controlled to a level where the coating 60 is not driven into the interstices 56 of the fabric 50. Thus, the coating 60 is applied so that the coating 60 does not substantially penetrate the interstices 56 of the fabric web, as discussed above.

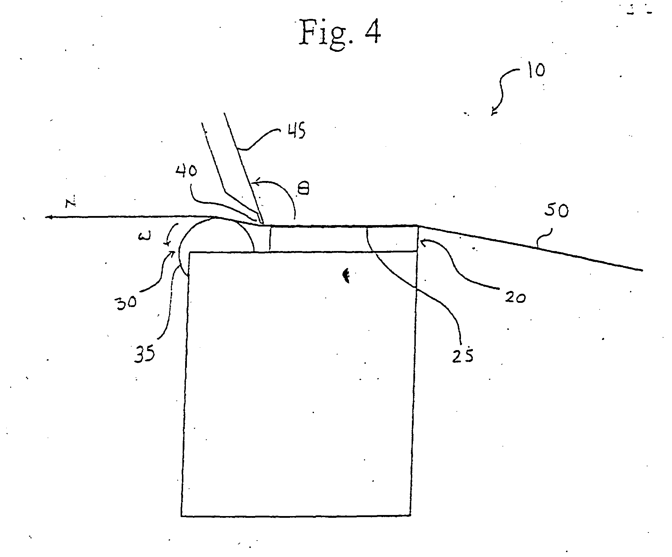

The coating blade 40 may be positioned in a substantially vertical manner (shown in FIG. 3). Alternatively, the coating blade 40 may be disposed at an angle θ from the plane defined by the upper surface 25 of the first support 20 (shown in FIG. 4). The angle θ may be, for example, approximately 90 to 100 degrees but is preferably 90 degrees.

In an exemplary embodiment, the coating blade 40 is be positioned in close proximity to the aft edge of the first support 20 so that the coating 60 is applied to the fabric 50 before the fabric 50 deflects (sinks) into the space between the first and second supports 20, 30. A distance from the aft edge of the first support 20 to the coating blade 40 may be, for example, approximately 0 to 0.050 inches but is preferably 0.040 inches. By positioning the coating blade 40 so that the coating 60 is applied prior to fabric deflection, the coating 60 overlies the fabric web and does not substantially penetrate the interstices 56.

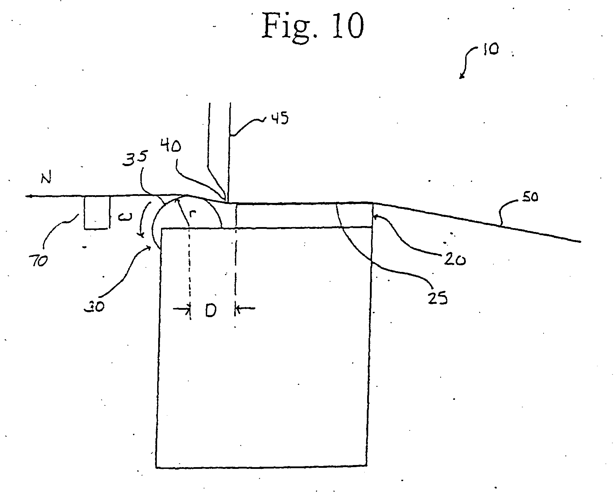

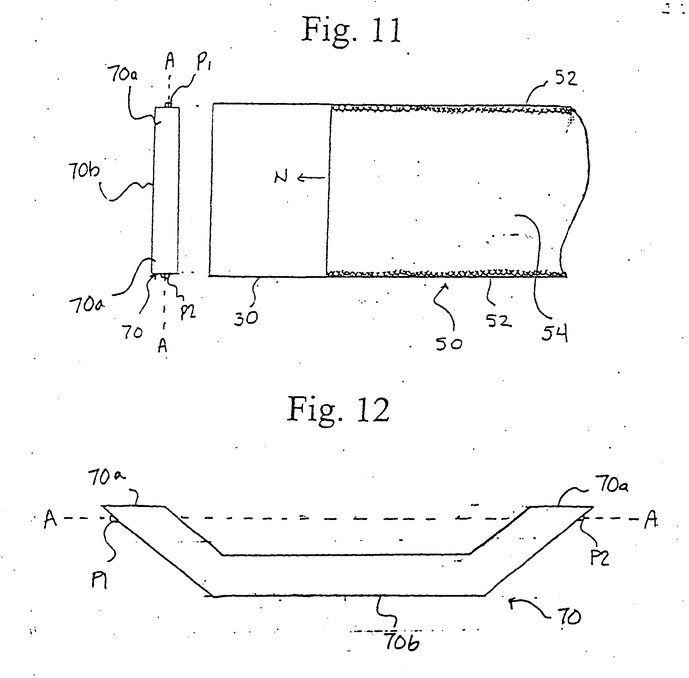

The coating apparatus 10 preferably includes a third support 70. The third support 70 may be located after the second support 30, as shown in FIGS. 10 and 11. For example, a forward edge of the third support 70 may be located at a distance of approximately 10 to 35 inches from the center of the second support 30. Alternatively, the third support 70 may be disposed between the first support 20 and the second support 30. For example, the third support 70 may be positioned under the fabric 50 in a region where the coating 60 is applied to the fabric 50.

The third support 70 is configured to compensate for uneven tension across the width of the fabric 50 by supporting lengthwise edges (or selvages) 52 of the fabric 50. For example, the third support 70 may be formed as an elongated bar extending in a widthwise direction of the fabric 50. The third support 70 may have a bent, bowed, or curved shape, as shown in FIG. 12. For example, end portions 70a of the third support 70 may bend, slope, or curve in a concave manner (e.g., along a longitudinal axis of an elongated bar) so that the end portions 70a extend upward to contact the fabric 50 at the selvages 52. It will be understood by those skilled in the art that the third support 70 may also be formed in other shapes such as a V-shape or a U-shape. The third support may be formed of any suitably rigid material, such as metal.

According to one embodiment, the third support 70 is fixedly mounted to the coating apparatus 10 so that a central portion 54 of the fabric 50 located between the selvages 52 is not in contact with the fabric 50. The third support 70 thereby supports the selvages 52 without substantially disturbing the central portion 54 of the fabric 50. Preferably, however, the third support 70 is pivotally mounted to the coating apparatus 10 at pivots P1 and P2. The pivots P1 and P2 enable the third support 70 to rotate about an axis A-A, as shown in FIGS. 11 and 12. The third support 70 can be pivoted upward so that a central portion 70b of the third support 70 contacts and supports the central portion 54 of the fabric 50. In this manner the central portion 54 is prevented from sagging.

Thus, the coating apparatus 10 may be configured to compensate for slack, sagging, floppy, and/or curled selvages, which may result from uneven tension across the width of the fabric 50. In this manner, the occurrence of non-uniformities, such as streaks of the coating 60 along the selvages 52, is reduced.

Thus, according to the embodiments described above, the coating apparatus 10 may be used to apply a coating 60 to a fabric 50 to form a layer of coating 60 having an average thickness $T_{avg}$, as described above. The fabric 50 is disposed in the coating apparatus 10 so that the fabric 50 is supported by the first support 20 and the second support 30. The fabric 50 is advanced from the first support 20 to the second support 30. As the fabric 50 advances, the second support 30 is rotated in the direction of fabric advancement so that relative motion between the fabric 50 and the second support 30 is reduced. Additionally, as the fabric 50 advances, the coating 60 is applied to an upper surface of the yarm bundles 52, 54 so that the coating 60 does not substantially penetrate the interstices 56 of the fabric 50. As a result, the layer of coating 60 overlies the fabric web and has a substantially uniform average thickness $T_{avg}$ across the fabric 50. Because the layer of coating 60 overlies the fabric web rather than penetrating (or siriking into) the interstices 56, the coating 60 efficiently coats the fabric 50 so that less coating is required. Additionally, when the interstices 56 are substantially free of the coating 60, the coating 60 sits higher on the fabric 50 and provides generally better coating coverage.

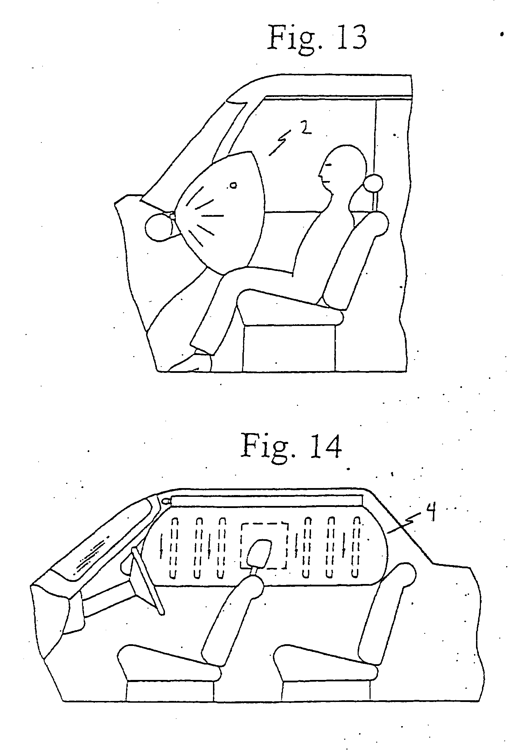

A coated fabric 50 having such characteristics possesses various advantages and may be used in a variety of applications. In particular, the coated fabric 50 is suitable for use as an inflatable airbag fabric. For example, the coated fabric 50 may be used as an airbag fabric for a driver side airbag 2 (shown in FIG. 13), a passenger side airbag (not shown), or a side curtain airbag 4 (shown in FIG. 14).

One advantage of the coated fabric 50 is that the coated fabric 50 may exhibit reduced air permeability, which makes the coated fabric 50 particularly useful in side curtain airbag applications. Because the coating apparatus 10 applies the coating 60 so that the coating overlies the fabric web with a substantially uniform average thickness $T_{avg}$ across the fabric 50 and does not penetrate the interstices 56 of the fabric 50 (as described above), the surface of the fabric 50 is sufficiently coated so as to be substantially impervious to air. As a result, when a side curtain airbag is constructed of the coated fabric 50, the airbag has a reduced leak loss rate.

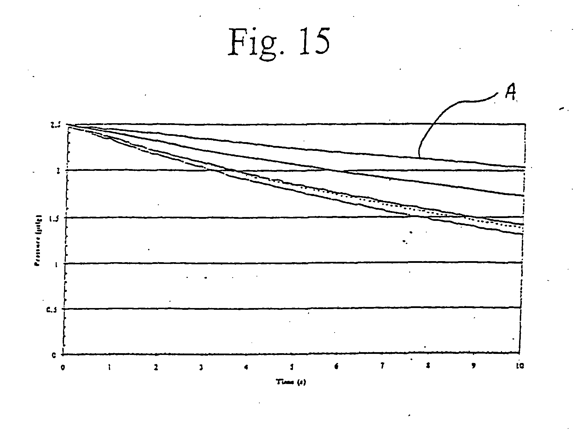

A leak loss rate of the coated fabric 50 may be determined by arranging a panel of the coated fabric 50 so that the panel forms a boundary of a pressure chamber. The pressure chamber is then pressurized to 2.5 psig so that a pressure gradient exists between a first side of the fabric panel (i.e., a side facing an interior of the pressure chamber) and second side of the fabric panel (i.e., a side facing an exterior of the pressure chamber). Pressure loss from the pressure chamber over time is measured. For example, as shown by data series A in FIG. 15, leakage of pressure through the fabric panel may result in a pressure loss of less than 0.5 psig over a 10 second time period when a coated portion of the fabric panel is faced toward the interior of the pressure chamber. In contrast, conventional side curtain airbag fabrics require a heavier layer of coating to achieve an equivalent leak loss rate. The heavier layer of coating is necessary to compensate for the coating penetrating the interstices of the conventional airbag fabric and results in a stiffer, heavier side curtain airbag.

Another advantage of the coated fabric 50 is that the coated fabric 50 may exhibit increased thermal resistivity and improved particulate bum-through characteristics, which make the coated fabric 50 particularly useful in airbag applications involving high temperatures generated by pyrotechnic inflators and rapidly expanding inflation gas. Because the coating apparatus 10 applies the coating 60 so that the coating overlies the fabric web with a substantially uniform average thickness $T_{avg}$ across the fabric 50 and does not penetrate the interstices 56 of the fabric 50 (as described above), the surface of the fabric 50 is sufficiently coated so as to exhibit improved thermal resistivity and burn-through characteristics. As a result, when an airbag is constructed of the coated fabric 50, the airbag may withstand high temperatures for a longer duration of time than an airbag constructed of a conventional airbag fabric. In applications involving pyrotechnic inflators, the coating 60 is preferably silicone.

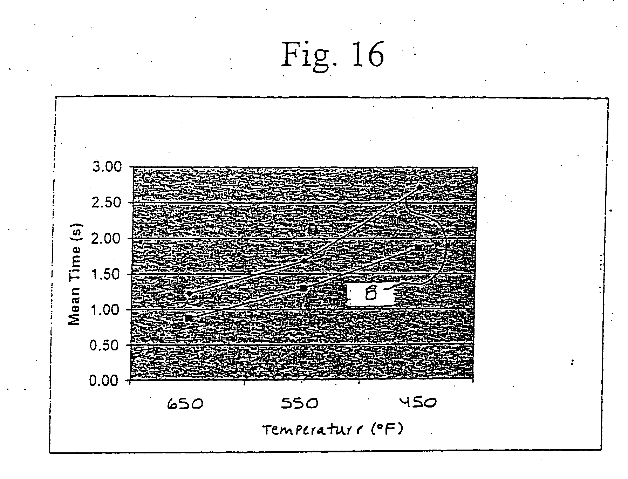

The thermal resistivity and bum-through characteristics of the coated fabric 50 may be evaluated by a hot rod test where a heated rod is dropped on a panel of the coated fabric 50. The time required for the heated rod to bum through the coated fabric 50 provides a measure of the thermal characteristics of the coated fabric 50. For example, as shown by data series B in FIG. 16, the coated fabric 50 may withstand contact with a heated rod having a temperature of 450 degrees Fahrenheit for over 2.5 seconds before the heated rod bums (or melts) through the coated fabric 50. In contrast, conventional airbag fabrics require a heavier layer of coating to achieve an equivalent bum-though time because the coating penetrates the interstices of the conventional airbag fabric so that the average coating thickness is variable. The heavier layer of coating is necessary to compensate for the coating filling the interstices of the conventional airbag fabric.

Another advantage of the coated fabric 50 is that the coated fabric 50 may exhibit reduced stiffness and improved pliability, which makes the coated fabric 50 particularly useful in airbag applications where the airbag must be folded compactly for stowage in a small airbag module. Because the coating apparatus 10 applies the coating 60 so that the coating overlies the fabric web with a substantially uniform average thickness $T_{avg}$ across the fabric 50 and does not penetrate the interstices 56 of the fabric 50 (as described above), a sufficient layer of coating may be achieved using less coating than a conventional airbag fabric. As a result, the bulk and weight of the coated fabric 50 is reduced. Additionally, less penetration of the coating 60 into the interstices 56 enables the internal fibers of the yarn bundles 52, 54 to remain free of the coating 60 and to retain pliability and flexibility so that locking of the yam bundles 52, 54 is reduced. When an airbag is constructed of the coated fabric 50, the airbag has an improved specific packability SP.

The specific packability SP is defined by the following equations, which are set forth in ASTM D 6478-02, "Standard Test Method for Determining Specific Packability of Fabrics Used in Inflatable Restraints," ASTM International (2002), incorporated by reference herein:

$$SP_{(n)}=\frac{(T_{20(c)}+T_{40(c)}+...+T_{(160)(c)}+T_{(180)(c)})\times100\times150}{1000} \tag{2}$$

where

$SP_{(n)}$ is the specific packability of specimen n;
$T_{N(c)}$ is a thickness (mm) of the specimen n at a load N from 20N to 180N in increments of 20 N;
100 is a width of a test box (mm);
150 is a length of the test box (mm); and
1/1000 is a conversion factor for converting $mm^3$ to $cm^3$.

$$SP = \frac{SP_{(1)}+SP_{(s)}+SP_{(3)}+SP_{(4)}}{4} \tag{3}$$

where
$SP_{(n)}$ is the specific packability of the specimen n; and
SP is the specific packability of a fabric lot from which the specimens n were taken.

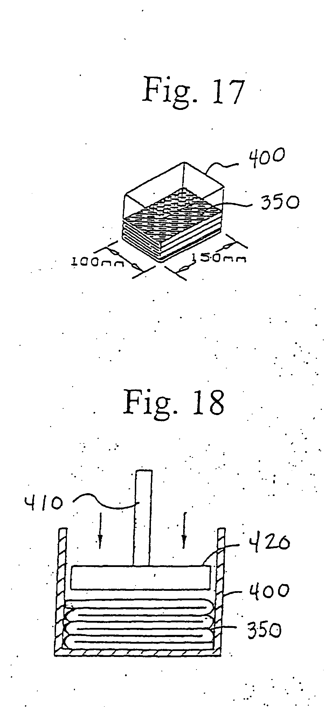

The specific packability SP of a fabric lot is determined by testing four fabric specimens from the lot and averaging the results. Testing a specimen 350 involves folding the specimen 350 uniformly in a Z pattern in the warp and fill directions and placing the folded specimen 350 into a transparent test box 400 (shown in FIG. 17) that confines the specimen 350 securely. The folded specimen 350 is compressed (shown in FIG. 18) using a tensile tester outfitted with a ram 410 and a compression plate 420. The compressed volume of the specimen 350 is recorded at specified loads (i.e., at loads of 20 N to 180 N in increments of 20 N), and the specific packability of the specimen $SP_{(n)}$ is the sum of the recorded volumes. A folded specimen exhibits better specific packability if the specimen occupies a lower total volume at the specified loads as compared to another specimen.

The coated fabric 50 may exhibit an improved specific packability SP relative to conventional airbag fabrics because conventional airbag fabrics require more coating to achieve a uniform average coating thickness. The additional coating is needed to compensate for the coating penetrating the interstices of the conventional airbag fabric. As a result, conventional airbag fabrics are stiffer, less pliable, and have poorer specific packability SP than the coated fabric 50.

Another advantage of the coated fabric 50 is that the coated fabric 50 may exhibit a reduced kinetic coefficient of friction $\mu_k$ (as defined by ASTM D 1894, "Standard Test Method for Static and Kinetic Coefficients of Friction of Plastic Film and Sheeting," ASTM International), which makes the coated fabric 50 particularly useful in airbag applications where the coated portions of the airbag are closely packed together when the airbag is stowed in the airbag module. Because the coating apparatus 10 applies the coating 60 so that the coating overlies the fabric web with a substantially uniform average thickness $T_{avg}$ across the fabric 50 and does not penetrate the interstices 56 of the fabric 50 (as described above), the topography of the coated fabric 50 is substantially smooth (i.e., lacks significant ridges, indentations, and waviness). As a result, the coated surfaces of the fabric 50 are able to slide over one another with relative ease so that a force required to maintain relative motion between surfaces and the coefficient of friction $\mu_k$ are reduced. According to an exemplary embodiment, the coefficient of friction $\mu_k$ is less than 0.4.

In contrast, the topography of a conventional airbag fabric includes non-uniformities (such as ridges, indentations, and waviness) caused by uneven coating application. As a portion of the conventional fabric moves over another portion of the conventional fabric, the non-uniformities cause the portions of fabric to catch on or adhere to one another so that more energy must be dissipated to overcome the friction between the portions of fabric. As a result, the kinetic coefficient of friction $\mu_k$ of a conventional airbag fabric is higher thereby impeding deployment of the airbag.

According to an embodiment, the coating 60 is silicone and preferably includes added lubricant. The addition of a silicone-compatible lubricant to the coating 60 increases the slickness of the coating resulting in a further reduction of the kinetic coefficient of friction $\mu_k$. The lubricant may be, for example, a suitable lubricant as described in U.S. Patent No. 4,856,502, incorporated by reference herein, but is preferably di-methyl siloxane fluid. In an exemplary embodiment, an additive such as a colorant may optionally be dispersed or embedded in the lubricant.

The kinetic coefficient of friction $\mu_k$ of the coated fabric 50 is determined as set forth in ASTM D 1894, incorporated by reference herein. A first piece of the coated fabric 50 is attached (e.g., wrapped) to a sled (weight) with a coated surface of the fabric 50 facing away from the sled. A second piece of the coated fabric 50 is secured to a horizontal bed with a coated surface of the fabric 50 facing away from the bed. The sled is attached to a drive mechanism, and the drive mechanism pulls the wrapped sled across the horizontal bed so that the first piece of fabric slides over the second piece of fabric. When the drive mechanism is started, no immediate relative motion takes place because of a static frictional force between the first and second pieces of fabric. When the pull on the sled (as measured by a scale or spring gage) is equal to or exceeds the static frictional force between the first and second pieces of fabric, the sled begins moving. When the sled is moving uniformly, an average scale reading $F_k$ is obtained, which represents the force required to sustain movement of the first piece of fabric over the second piece of fabric.

The kinetic coefficient of friction $\mu_k$ of the coated fabric 50 is determined from the following equation:

$$\mu_k = \frac{F_{ki}}{W} \tag{4}$$

where:

$\mu_k$ = kinetic coefficient of friction of the coated fabric
$F_k$ = average scale reading obtained during uniform sliding of the first and second pieces of fabric, and
$W$ = sled weight.

During the manufacturing of various fabrics, certain coatings may be applied to protect or enhance the fabric. For example, a silicone coating is often applied to fabrics to provide increased strength and resistance to tearing. Typically, the coating is applied while the fabric is on a conveyor and being carried through one or more processing stations. The various stations may be used to perform a specific treatment on the fabric. For example, a fabric maybe prepared for a coating at one station, the coating may be applied at another station, and the coating cured at still another station.

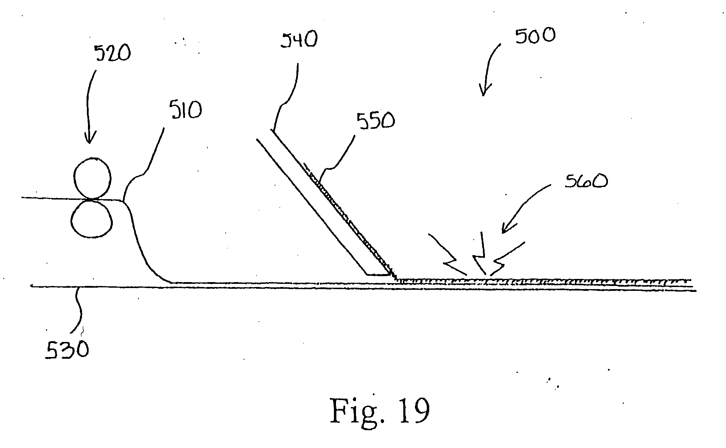

FIG. 19 illustrates one embodiment of a fabric treatment arrangement according to the present invention. In the illustrated arrangement 500, a fabric 510 is fed into the arrangement 500 from, for example, a roll (not shown). The fabric 510 is delivered to the arrangement 500 through a feeding device, such as rollers 520. The rollers 520 may control the rate at which the fabric 510 is fed into the arrangement.

The fabric 510 is delivered by the rollers 520 onto a conveyor 530 for transporting the fabric 510 through the various stations of the arrangement 500. The fabric 510 may be processed through various stations while being transported on the conveyor 530. In the illustrated embodiment, the fabric 510 is transported to a coating station where the fabric 510 may be coated with a material 550, such as silicone.

Various methods of coating are known to those skilled in the art, including knife-over roll coating, also known as blade coating. In this regard, a coating blade 540 is illustrated in FIG. 19. The fabric 510 is transported between the coating blade 540 on the conveyor, and the coating material (e.g., silicone) is applied uniformly along the width of the coating blade 540. The scope of the present invention includes numerous other acceptable coating devices well known in the art.

Once the silicone coat 550 has been applied to the fabric 510, the conveyor 530 may transport the fabric 510 to another station. For example, a downstream station may be provided to cure the silicone coating through a variety of curing methods.

In many cases, however, the transport rate of the fabric 510 on the conveyor 530 is limited. At a high rate of transport, an electrostatic charge may build up on the fabric through the transport by the conveyor. The electrostatic charge is illustrated in FIG. 19 as reference numeral 560. Static charge on the fabric may cause the silicone coating to conglomerate or clump. These clumps are sometimes referred to as "spits." In particular, this conglomeration or clumping of the silicone may occur between the coating of the fabric and the curing of the silicone coating. Thus, the conglomeration or clumping may appear in the final product after the curing of the coating. Such conglomeration and clumping may result in significant defects in the fabric and the final product. For example, a weakness in the fabric may occur due to the defects, possibly resulting in unexpected tearing of the fabric. The electrostatic charging, and therefore the conglomeration and clumping, may be reduced by lowering the rate of transport of the fabric. However, the reduced rate of transport results in significant reduction in throughput of the arrangement 500.

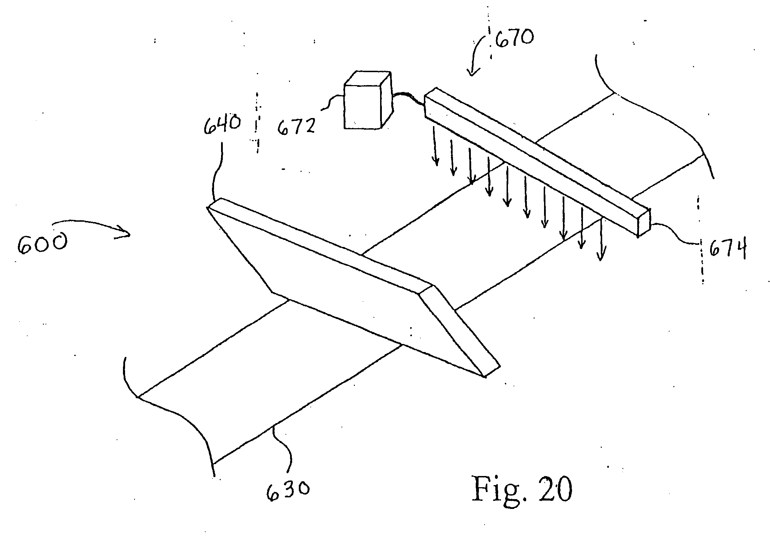

FIG. 20 illustrates an arrangement by which the conglomeration and clumping of the coating on a fabric is substantially decreased, allowing a greater rate of transport and thereby providing increased throughput. In this arrangement 600, a conveyor 630 is provided to carry a fabric (not shown) through the various stations for processing. A blade coating apparatus 640 is provided to supply a silicone coat to the fabric. Downstream of the blade coating apparatus 640 a static neutralization unit 670 is provided to act upon the fabric on the conveyor 630.

The static neutralization unit or mechanism 670 includes a control module 672 for controlling and supplying power to an air ionizing bar 674. An exemplary static neutralization unit 670 is available through ExAir under the trade name EXAIR-Ionizer™. The air ionizing bar 674 is adapted to provide a curtain of ionized air directed at the conveyor 630. The ionized air includes positive and negative ions and is moved at a high velocity. The high velocity prevents the positive and negative ions in the curtain from recombining. Instead, the ions are streamed to the fabric on the conveyor 630, thereby neutralizing any static charge existing on the fabric. Thus, conglomeration or clumping of the silicone coating is thereby significantly reduced or eliminated.

The static charge existing on the fabric after the conveyor 630 transports the fabric through the static neutralization unit 670 can be measured using an electrostatic voltmeter or static monitor. After the fabric moves through the static neutralization unit 670, the post-neutralization static charge on the fabric is negligible. For example, the post-neutralization static charge is less than 5 volts, preferably less than 1 volt and, according to an embodiment of the invention, essentially about zero volts.

The static neutralization unit 670 is preferably located immediately downstream of a coating station, such as the blade coater 640. In this regard, the distance between the coating station and the static neutralization unit 670 is less than one meter.

As a result of the reduction or elimination of the electrostatic charge, the rate of transport of the fabric through the arrangement may be increased. Thus, the throughput of the arrangement may be increased. In one exemplary arrangement, the throughput may be doubled from 30 yards per minute to 60 yards per minute with comparable results in the quality of the fabric and the coating.

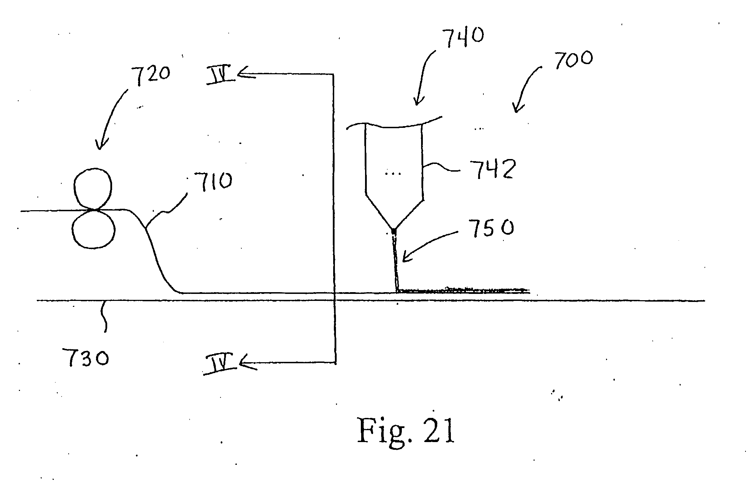

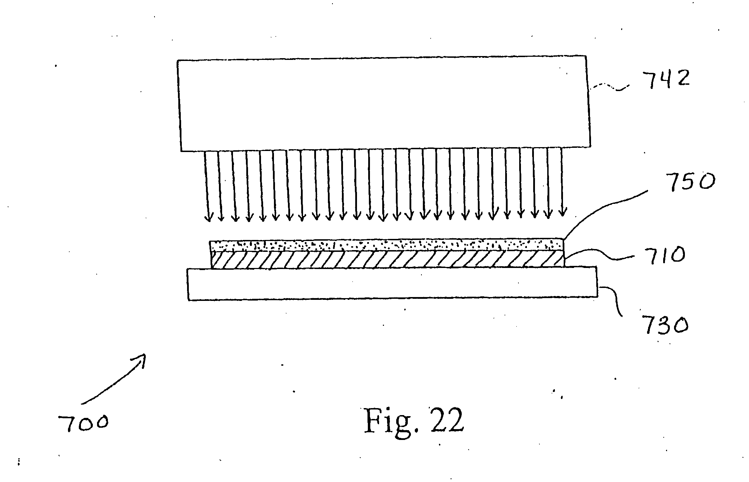

FIGS. 21 and 22 illustrate a fabric coating arrangement according to an embodiment of the present invention. In the illustrated arrangement 700, a fabric web 710 is fed into the arrangement 700 from, for example, a roll (not shown). The fabric web 710 is delivered to the arrangement 700 through a feeding device, such as rollers 720. The rollers 720 may control the rate at which the fabric web 710 is fed into the arrangement.

The fabric web 710 may be delivered by the rollers 720 onto a conveyor 730 for transporting the fabric web 710 through various stations of the arrangement 700. The rollers 720 place the web 710 onto the conveyor 730 in a predetermined configuration. The predetermined configuration may be a relaxed state, a compressed state, or a stretched state. In this regard, the feed rate from the rollers 720 may be associated with a transport rate of the conveyor 730. Regardless of the predetermined configuration of the fabric web 710 on the conveyor 730, the state of the web 710 is uniform in the machine direction (left-right in FIG. 21). The fabric web 710 lays generally flat on the conveyor 730.

The fabric web 710 may be processed through the various stations while being transported on the conveyor 730. In the illustrated embodiment, the fabric web 710 is transported to a coating station 740 where the fabric web 710 may be coated with a coating material such as silicone. The fabric web 710 remains in the predetermined configuration on the conveyor 730 throughout the transport through the coating station 740. It will be understood by those skilled in the art that other processing stations may be provided between the rollers 720 and the coating station 740.

The coating station 740 includes a dispenser 742 for dispensing a coating 750 onto the fabric web 710. In one embodiment, the coating 750 is a silicone coating. In particular, the silicone is in liquid form. The liquid silicone provided through the dispenser may have a viscosity of between 5,000 and 50,000 centipoise. This viscosity allows a uniform curtain to be formed as the silicone is dispensed. As used herein, the term "curtain" refers to a stream of material having a substantially uniform thickness. The curtain may be adapted to be dispensed substantially vertically onto a fabric web.

The dispenser 742 is adapted to dispense the silicone in a liquid form. The dispenser may include a nozzle which extends in the cross-machine direction (left-right in FIG. 22) to provide a desired level of coating across the fabric web 710. The nozzle may be sized to dispense the coating material at a desired rate and form, such as, for example, in the form of a sheet or curtain.

It will be understood by those skilled in the art that additional components may be included in the coating station 740. For example, an extruder may be provided to supply an extruded coating to the dispenser 742 for dispensing onto the fabric web 710. The extruder may include, for example, an extruder die and a heating element for converting a solid coating material into a liquid or semi-soft material to be forced under pressure through the extruder die. Preferably, the coating station 740 includes a slot die through which liquid coating is forced under pressure. The slot die may be, for example, a slot die available from Liberty Coating Equipment, a Coating & Converting Resources, Inc. (CCR) company.

As most clearly illustrated in FIG. 22, the dispenser 742 provides a curtain of liquid for coating the fabric web 710. In one embodiment, the dispenser 742 is positioned approximately 1/4 inch to 3 inches above the fabric web 710. As the silicone is dispensed and as the fabric web 710 is transported beneath the dispenser 742, a layer of liquid silicone is laid onto the fabric web 710. The curtain of liquid silicone dispensed by the dispenser 742 has a preformed thickness to provide a uniform coating onto the entire fabric, with particular uniformity in the cross-machine direction. The silicone is preferably dispensed at room temperature.

By providing a coating 750 having a preformed thickness, the coating 750 is applied so that the resulting layer of coating 750 overlies the fabric web 710 and does not substantially penetrate interstices of the fabric web. Thus, the resulting layer of coating has a substantially uniform average thickness $T_{avg}$ (as described above) across the fabric. The average thickness $T_{avg}$ may be, for example, greater than 20 microns but is preferably approximately 30 microns. In contrast, when the same mass of coating is applied to a conventional airbag fabric, the resulting coating layer has an average thickness of less than 20 microns (typically 14 to 15 microns) because the coating penetrates the interstices of the conventional airbag fabric thereby reducing the amount of coating overlying the fabric web.

Thus, a fabric web having substantially uniform average thickness $T_{avg}$ is provided. This uniformity results in a fabric with increased thermal resistivity and air permeability, as discussed above. Further, defects or weaknesses in the final product, such as a vehicle airbag, are substantially reduced.

Other embodiments of the invention will be apparent to those skilled in the art from consideration of the specification and practice of the invention disclosed herein. It is intended that the specification and examples be considered as exemplary only.

### Claims

1. A coated fabric, comprising:

   a fabric web; and
   a coating layer,

   wherein the coating layer overlies the fabric web so that the coated fabric has increased resistance to particulate burn-through.

2. The coated fabric of claim 1 or 2, wherein the coated fabric is configured so that a time for an element having a temperature of approximately 450 degrees Fahrenheit to bum through the coated fabric is greater than 2.5 seconds.

3. The coated fabric of claim 1, 2 or 3, wherein an average thickness of the coating layer is greater than 20 μm.

4. The coated fabric of claim 1, wherein the coating layer comprises silicone.

5. A coated fabric for an airbag, wherein the coated fabric is configured so that a time for an element having a temperature of approximately 450 degrees Fahrenheit to bum through the coated fabric is greater than 2.5 seconds.

6. An airbag for protecting an occupant of a vehicle, wherein the airbag is formed of a coated fabric configured so that a time for an element having a temperature of approximately 450 degrees Fahrenheit to burn through the coated fabric is greater than 2.5 seconds.

Prior Art

Fig. 1

Prior Art

Fig. 2

# Fig. 3

Fig. 4

# Fig. 5

30

20

W

# Fig. 6

45

40

55

25

20

H

# Fig. 7

# Fig. 8

# Fig. 9

50'

50A    50B    50C    60

52

52

54

# Fig. 10

## Fig. 11

## Fig. 12

## Fig. 13

## Fig. 14

# Fig. 15

# Fig. 16

Fig. 17

Fig. 18

Fig. 19

Fig. 20

Fig. 21

EP 1 591 325 A1

Fig. 22

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 478 897 A (TEIJIN LIMITED) 8 April 1992 (1992-04-08) * page 6, line 29 - page 7, line 7 * ----- | 1-6 | B60R21/16 D03D1/02 D06N3/12 |
| X | US 2002/055311 A1 (CHILD ANDREW D ET AL) 9 May 2002 (2002-05-09) * paragraphs [0004], [0006], [0010], [0018] * ----- | 1-6 | |
| X | EP 1 108 764 A (SHIN-ETSU CHEMICAL CO., LTD) 20 June 2001 (2001-06-20) * paragraph [0001] - paragraph [0003] * ----- | 1,3,4 | |
| X | EP 1 365 059 A (ASAHI KASEI KABUSHIKI KAISHA) 26 November 2003 (2003-11-26) * paragraph [0042] - paragraph [0043] * ----- | 1,4 | |
| A | US 5 104 727 A (WNENCHAK ET AL) 14 April 1992 (1992-04-14) * column 5, line 43 - line 48 * * column 4, line 12 - line 33; figures 4,5 * ----- | 1-6 | |
| A | DE 100 56 837 A1 (TAKATA CORP., TOKIO/TOKYO) 28 June 2001 (2001-06-28) * the whole document * ----- | 1-6 | TECHNICAL FIELDS SEARCHED (Int.Cl.7) B60R D03D D06N |
| A | EP 1 044 803 A (TRW OCCUPANT RESTRAINT SYSTEMS GMBH & CO. KG; TRW AUTOMOTIVE GMBH) 18 October 2000 (2000-10-18) * the whole document * ----- | 2,3,5,6 | |

The present search report has been drawn up for all claims

| Place of search | Date of completion of the search | Examiner |
|---|---|---|
| Munich | 6 July 2005 | Cipriano, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 2696

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2005

| Patent document cited in search report | | Publication date | Patent family member(s) | | Publication date |
|---|---|---|---|---|---|
| EP 0478897 | A | 08-04-1992 | JP | 4262938 A | 18-09-1992 |
| | | | JP | 4143141 A | 18-05-1992 |
| | | | JP | 4146233 A | 20-05-1992 |
| | | | JP | 4163252 A | 08-06-1992 |
| | | | CA | 2044378 A1 | 03-04-1992 |
| | | | EP | 0478897 A1 | 08-04-1992 |
| | | | US | 5215795 A | 01-06-1993 |
| US 2002055311 | A1 | 09-05-2002 | AU | 1472601 A | 06-06-2001 |
| | | | BR | 0015432 A | 09-07-2002 |
| | | | CA | 2389043 A1 | 17-05-2001 |
| | | | CN | 1387484 A | 25-12-2002 |
| | | | EP | 1227953 A1 | 07-08-2002 |
| | | | JP | 2004532936 T | 28-10-2004 |
| | | | MX | PA02004378 A | 02-09-2002 |
| | | | WO | 0134435 A1 | 17-05-2001 |
| | | | US | 2001019740 A1 | 06-09-2001 |
| EP 1108764 | A | 20-06-2001 | JP | 2001164187 A | 19-06-2001 |
| | | | DE | 60002420 D1 | 05-06-2003 |
| | | | DE | 60002420 T2 | 11-03-2004 |
| | | | EP | 1108764 A2 | 20-06-2001 |
| | | | US | 6425600 B1 | 30-07-2002 |
| EP 1365059 | A | 26-11-2003 | EP | 1365059 A1 | 26-11-2003 |
| | | | US | 2004077236 A1 | 22-04-2004 |
| | | | CN | 1518620 A | 04-08-2004 |
| | | | WO | 02061200 A1 | 08-08-2002 |
| | | | TW | 521051 B | 21-02-2003 |
| US 5104727 | A | 14-04-1992 | CA | 2050342 A1 | 17-12-1990 |
| | | | DE | 69008723 D1 | 09-06-1994 |
| | | | DE | 69008723 T2 | 15-12-1994 |
| | | | EP | 0476061 A1 | 25-03-1992 |
| | | | JP | 5500641 T | 12-02-1993 |
| | | | WO | 9015713 A1 | 27-12-1990 |
| DE 10056837 | A1 | 28-06-2001 | JP | 2001138849 A | 22-05-2001 |
| EP 1044803 | A | 18-10-2000 | DE | 29906538 U1 | 30-09-1999 |
| | | | DE | 50009323 D1 | 03-03-2005 |
| | | | EP | 1044803 A2 | 18-10-2000 |
| | | | JP | 2000296748 A | 24-10-2000 |
| | | | US | 2002041941 A1 | 11-04-2002 |

EPO FORM P0459

For more details about this annex : see Official Journal of the European Patent Office, No. 12/82